# EUROPEAN PATENT APPLICATION

(11) **EP 0 945 884 A1**
(43) Date of publication of application: **29.09.1999**
(21) Application number: 99105053.5
(22) Date of filing: 23.03.1999
(51) Int. Cl.: H01J 1/30

(54) **Field emission device using a boron nitride nanotube electron source**

(30) Priority: 23.03.1998 JP 7405898
(71) Applicant: NEC CORPORATION, Tokyo (JP)
(72) Inventor: Miyamoto, Yoshiyuki, Minato-ku, Tokyo (JP)
(74) Representative: Patentanwälte Dipl.-Ing. R. Splanemann Dr. B. Reitzner Dipl.-Ing. K. Baronetzky

(57) **Abstract**

There is provided an electron emission device which has an electron source of a boron nitride nanotube so that the electron emission device exhibits a highly efficient electron emission at a low electric field. The boron nitride nanotube electron source is applied with an electric field.

## Description

The present invention relates to a field emission device using a boron nitride nanotube electron source.

In recent years, field emission techniques have been progressed which use diamond or boron nitride. In Japanese laid-open patent publications Nos. 3-233826 and 60-1717, field emission ion sources using a titanium boride pin are disclosed. In Journal of Applied Physics 82(10), p-5148 and Applied Physics Letters 71(18), p-2704 1997, field emission technique from boron nitride are disclosed. Wise gap coating materials are chemically stable, for which reason those devices are attractive in long life-time. In Japanese laid-open patent publications Nos. 3-233826 and 60-1717, it is disclosed that a wide gap material coats a metal electrode for a highly efficient electron emission with a low electrode field. In Journal of Applied Physics 82(10), p-5148, it is disclosed that a wide gap material is grown on an impurity doped diamond or silicon substrate. In Applied Physics Letters 71(18), p-2704 1997, it is disclosed that an impurity is doped into the wide gap material. Electron energy state of the wide gap material is much deeper than a vacuum energy state, for which the substrate comprises a narrow energy band gap material for serving electron donors or impurity forms energy states in the energy band gap for emitting electrons from the energy states. In order to obtain the electron emission device showing a highly efficient electron emission at a low electric field, it is necessary to carry out the above additional processes for impurity doping or coating an electrode with the wide gap material.

In the above circumstances, it had been required to develop a novel electron emission device showing a highly efficient electron emission at a low electric field and may be fabricated in single processes.

Accordingly, it is an object of the present invention to provide a novel electron emission device free from the above problems.

It is a further object of the present invention to provide a novel electron emission device showing a highly efficient electron emission at a low electric field.

It is a still further object of the present invention to provide a novel method of forming an electron emission device free from the above problems.

It is yet a further object of the prcsent invention to provide a novel method of forming an electron emission device showing a highly efficient electron emission at a low electric field in single processes.

In accordance with the present invention, there is provided an electron emission device which has an electron source of a boron nitride nanotube so that the electron emission device exhibits a highly efficient electron emission at a low electric field. The boron nitride nanotube electron source is applied with an electric field.

The above and other objects, features and advantages of the present invention will be apparent from the following descriptions.

Preferred embodiments according to the present invention will be described in detail with reference to the accompanying drawings.

FIG. 1 is a schematic developed view illustrative of a top portion of a top-pointed boron nitride nanotube in accordance with the present invention.

FIG. 2 is a schematic view illustrative of a top portion of a top-pointed boron nitride nanotube in accordance with the present invention.

FIG. 3 is a schematic view illustrative of field applied parts of an electron emission device in accordance with the present invention.

In accordance with the present invention, there is provided an electron emission device which has an electron source of a boron nitride nanotube so that the electron emission device exhibits a highly efficient electron emission at a low electric field. The boron nitride nanotube electron source is applied with an electric field.

There is also provided a method of forming an electron emission device which is provided with an electron source of a boron nitride nanotube to which an electric field is applied so that the electron emission device exhibits a highly efficient electron emission at a low electric field.

The boron nitride nanotube has a boron-nitrogen bonding structure except for a sharp-pointed top. The sharp-pointed top of the boron nitride nanotube has a boron-boron bonding structure and/or a nitrogen-nitrogen bonding structure. Boron-boron bonding and nitrogen-nitrogen bonding are sufficiently strong to keep the sharp-pointed shape. In the sharp-pointed top of the boron nitride nanotube, the band gap has energy states of electrons supplied from the boron-boron bonding and nitrogen-nitrogen bonding, whereby electrons generated from the boron nitride nanotube are first moved into the energy states of the sharp-pointed top of the boron nitride nanotube. Since the field concentration appears on the sharp-pointed top of the boron nitride nanotube, the electrons are emitted from the sharp-pointed top of the boron nitride nanotube. The sharp-pointed top of the boron nitride nanotube is used as the field emission cathode or electrode for obtaining the highly efficient electron emission at a flow electric field. The above energy states are supplied from the boron-boron bonding and nitrogen-nitrogen bonding existing only at the sharp-pointed top of the boron nitride nanotube, for which reason the highly efficient electron emission at a flow electric field is required in cooperation with the effect of field concentration at the sharp-pointed top. It is unnecessary that the wide gap material is grown on the substrate or impurity is doped into the wide gap material. This means that the electron emission device showing the highly efficient electron emission at a flow electric field can be obtained in the simple processes.

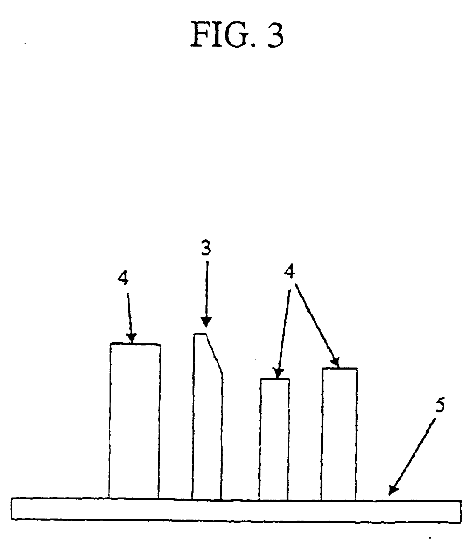

With reference to FIG. 3, boron nitride nanotubes 3 and 4 are formed on a substrate 5. The boron nitride nanotube 3 has a sharp-pointed top, whilst the boron nitride nanotube 4 has a flat top. The substrate 5 also serves as a cathode electrode for field emission.

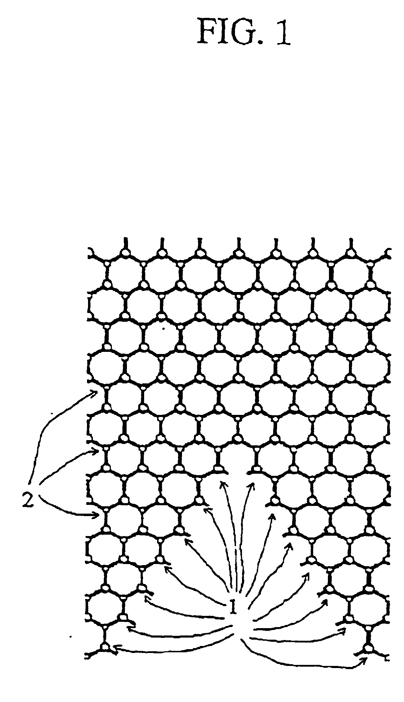

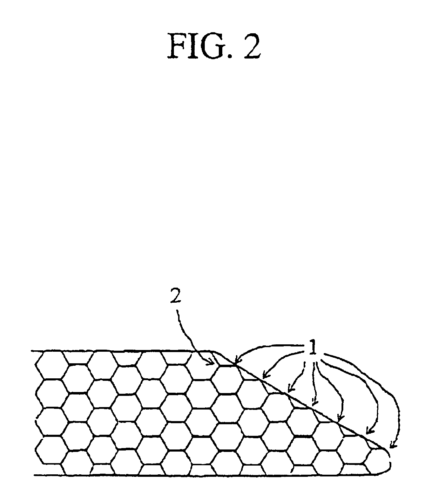

With reference to FIGS. 1 and 2, atoms marked with "1" are bonded with each other, thereby to form a sharp-pointed top of the boron nitride nanotube is formed. The atoms marked with "1" are different from atoms marked with "2". If the atoms marked with "1" are boron, then the atoms marked with "2" are nitrogen. If the atoms marked with "1" are nitrogen, then the atoms marked with "2" are boron. Afield is applied to the substrate 5 or the cathode electrode, electrons are emitted at a high efficiency with a low electric field from the sharp-pointed top of the boron nitride nanotube 3 in cooperation with a

The boron nitride nanotube is formed at a field applied portion of the electron emission device. A HfB₂ rod is fixed to the electrode or cathode A are discharge is carried out under nitrogen partial pressure of 700 Mbar and an applied voltage of 20-40V and a current of 60A. the boron nitride nanotube is formed in an anode side.

A minimum diameter of the boron nitride nanotube is 2 nanometers. About 5% of the boron nitride nanotubes has a sharp-pointed top structure. When a high electric field is applied to the boron nitride nanotubes, electron emissions can be obtained from the boron nitride nanotubes having the sharp-pointed top structure. The field concentration at the sharp-pointed top of the boron nitride nanotube causes the sharp-pointed top to have an effective electric field higher by 100 times than the applied field. If the applied voltage is 10V, then a stable current of not less than 2× 10⁻⁴A can be obtained.

Whereas modifications of the prcscnt invention will be apparent to a person having ordinary skill in the art, to which the invention pertains, it is to be understood that embodiments as shown and described by way of illustrations are by no means intended to be considered in a limiting sense. Accordingly, it is to be intended to cover by claims all modifications which fall within the spirit and scope of the present invention.

## Claims

1. An electron emission device having a boron nitride nanotube serving as an electron donor.

2. The electron emission device as claimed in claim 1, characterized in that the boron nitride nanotube has a sharp-pointed top structure.

3. The electron emission device as claimed in claim 1, characterized in that the sharp-pointed top structure of the boron nitride nanotube has at least one of boron-boron bonding structure and nitrogen-nitrogen bonding structure.

4. A boron nitride nanotube having a sharp-pointed top structure which has at least one of boron-boron bonding structure and nitrogen-nitrogen bonding structure.
